Europäisches Patentamt

European Patent Office

Office européen des brevets

(19)

(11) **EP 0 924 894 A2**

(12) **EUROPÄISCHE PATENTANMELDUNG**

(43) Veröffentlichungstag:
    23.06.1999 Patentblatt 1999/25

(51) Int. Cl.$^6$: **H04L 9/22**

(21) Anmeldenummer: 98123376.0

(22) Anmeldetag: 08.12.1998

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **22.12.1997 DE 19757370**

(71) Anmelder:
    **SIEMENS AKTIENGESELLSCHAFT
    80333 München (DE)**

(72) Erfinder: **Heeke, Helmut
    81245 München (DE)**

(54) **Verfahren zur Erzeugung pseudo-zufälliger Datenworte zur Verschlüsselung**

(57)     Mit Hilfe eines ersten Verfahrens werden erste pseudozufällige Datenworte ($y_n$) gebildet und in Abhängigkeit von diesen aus mehreren Verknüpfungsvorschriften ($f_{0...7}(r)$) eine aktuelle Verknüpfungsvorschrift ($f_k(r)$) ausgewählt. Mit Hilfe eines zweiten Verfahrens werden zweite pseudo-zufällige Datenworte ($x_n$) durch Verknüpfung von Datenworten ($x_{n-1}...x_{n-5}$) einer Folge von Datenworten gemäß der aktuell ausgewählten Verknüpfungsvorschrift ($f_k(r)$) gebildet. Aus den zweiten pseudo-zufälligen Datenworten ($x_n$) werden pseudo-zufällige Datenworte ($k_n$) gebildet, wobei diese vorteilhaft zur zuverlässigen Verschlüsselung hochbitratiger Nutzinformationen vorgesehen sind.

## Beschreibung

In der aktuellen Kommunikationstechnik werden für die Sicherung und die Authentifizierung vertraulicher, über drahtgebundene oder drahtlose Kommunikationsnetze zu übermittelnder Nutzdaten unterschiedliche Verschlüsselungsverfahren eingesetzt. Aktuelle Verschlüsselungsverfahren sind entweder dem Blockchiffrierungs- oder den Stromchiffrierungsverfahren zuzuordnen.

Beim Blockchiffrierungsverfahren werden Nutzinformationen repräsentierende Datenbits oder aus mehreren Datenbits bestehende Datenworte zu einer Gruppe von Datenbits oder Datenworte zusammengefaßt und gemeinsam verschlüsselt. Einfache Blockchiffrierungsverfahren basieren beispielsweise auf einfachen Zeichensubstitutionen und verarbeiten 8 zu einer Gruppe oder zu einem Datenblock zusammengefaßte Datenbits. Polyalphabetische Verfahren - auch als Vigenere-Chiffrierung bezeichnet - verarbeiten beispielsweise Datenblöcke von 8 Byte oder 256 Byte, wobei die Datenbits eines Datenblockes auf komplizierte Weise verknüpft werden. Beispiele für implementierte Blockchiffrierungsverfahren sind: DES - Digital Encryption Standard -, IDEA, RC5.

Stromchiffrierungsverfahren werden beispielsweise zur OnlineChiffrierung von Nachrichtenkanälen oder zur Verschlüsselung von auf Patenträger zu speichernden Nutzinformationen eingesetzt. In Abhängigkeit von einem Schlüssel wird eine pseudozufällige, aus Datenbits oder Datenworte bestehende Datenwortfolge erzeugt, mit welcher die zu verschlüsselnden Nutzinformationen Exklusiv-ODER verknüpft werden. Die Sicherheit eines Chiffrierverfahrens, insbesondere der Stromchiffrierungsverfahren, ist von der Qualität der erzeugten pseudo-zufälligen Folge von Datenbits oder Datenworten abhängig. Pseudo-zufällige Datenworte müssen ein statistisch eindeutiges Verhalten aufweisen, wobei aus einer Teilfolge der erzeugten, pseudozufällige Datenworte nicht die gesamte Datenwortfolge oder der Schlüssel zur Erzeugung der pseudozufälligen Datenworte rekonstruierbar sein darf. Bekannte Stromchiffrierungsverfahren sind beispielsweise: RC4, SEAL, oder A5.

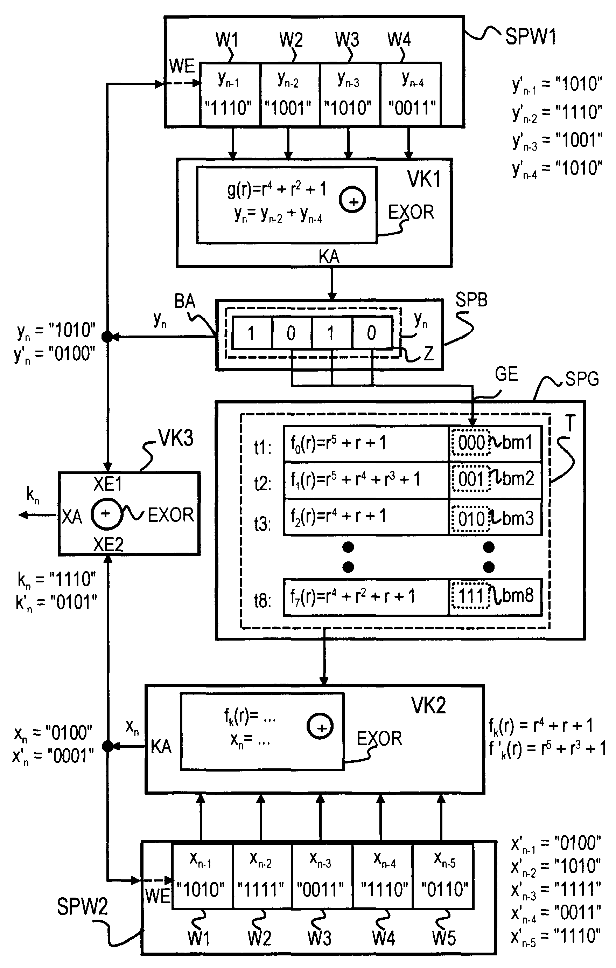

In der Druckschrift "Abenteuer Kryptologie: Methoden, Risiken und Nutzen der Datenverschlüsselung, Reinhard Wobst, Bonn, Reading, Massachusetts [u.a.], Addison-Wesley-Longman, 1997" ist beispielsweise die Verschlüsselung von GSM-Funkkanälen in drahtlosen Kommunikationsnetzen mit Hilfe des Stromchiffrierungsverfahrens "A5" beschrieben. Bei dem beschriebenen Algorithmus werden für die Erzeugung von pseudo-zufälligen Datenbits Schieberegister mit linearer Rückkopplung - auch als LFSR bzw. Linear Feedback Shift Register bezeichnet - eingesetzt. Ein Schieberegister stellt eine Speicherzelle dar, in welcher eine beliebige Anzahl z von Datenbits speicherbar sind. Schieberegister sind vorteilhaft durch eine hohe Verarbeitungsgeschwindigkeit aufweisende Schaltkreise realisierbar. Durch im Schieberegister realisierte, lineare Funktionen werden bestimmte, in den Speicherzellen des Schieberegisters gespeicherte Datenbits ausgewählt und Exklusiv-ODER verknüpft. Bei einer anschließenden, durch Taktsignale gesteuerten Links- bzw. Rechts-Verschiebung der im Schieberegister angeordneten Datenbits wird durch die Rückkopplung das im vorhergehenden Taktintervall gebildete Verknüpfungsergebnis in der frei gewordenen höchst- oder niederwertigsten Speicherzelle des Schieberegisters gespeichert, wobei das vorhergehende nieder- oder höchstwertigste Datenbit über einen Ausgang weitergeleitet wird - vgl. Seite 209, Abb. 5.18. Zur Verschlüsselung von Nutzinformationen wird entweder das bei jedem Taktintervall erzeugte, aktuelle Verknüpfungsergebnis der Exklusiv-ODER Verknüpfung oder das bei jeder Verschiebung des Schieberegisters an den Ausgang geleitete Datenbit als pseudo-zufällige Datenbit-Folge zur Verschlüsselung von Nutzinformationen genutzt. Bei einer Initialisierung des Schieberegisters zu Beginn eines Verschlüsselungsvorgangs werden gemäß eines vorher definierten Schlüssels in den einzelnen Speicherzellen des Schieberegisters bestimmte Initialisierungs-Datenbits gespeichert. Mit Hilfe des beschriebenen LFSR-Schieberegisters kann eine pseudo-zufällige Folge von Datenbits mit einer Periodenlänge von max. $2^{z-1}$ erzeugt werden, wobei z der Anzahl der im LFSR-Schieberegister gespeicherten Datenbits entspricht. Den ständig steigenden sicherheitstechnischen Anforderungen in der Kommunikationstechnik, insbesondere bei der übermittlung von vertraulichen Informationen, können die bekannten Verschlüsselungsverfahren nicht immer gerecht werden.

Der Erfindung liegt daher die Aufgabe zu Grunde, die Verschlüsselung bzw. die Chiffrierung von in Kommunikationsnetzen, insbesondere in Teilnehmeranschlußnetzen zu übermittelnden oder in diesen zu speichernden Nutzinformationen zu verbessern. Die Aufgabe wird durch die Merkmale des Patentanspruchs 1 gelöst.

Beim erfindungsgemäßen Verfahren zur taktilen Erzeugung pseudo-zufälliger Datenworte werden erste pseudo-zufällige Datenworte mit Hilfe eines ersten Verfahrens zur Erzeugung pseudo-zufälliger Datenworte und zweite pseudo-zufällige Datenworte mit Hilfe eines zweiten Verfahrens zur Erzeugung pseudo-zufälliger Datenworte gebildet. Der wesentliche Aspekt des erfindungsgemäßen Verfahrens besteht darin, daß in Abhängigkeit von den gebildeten ersten pseudo-zufälligen Datenworten aus mehreren Verknüpfungsvorschriften eine aktuelle Verknüpfungsvorschrift ausgewählt wird, und daß die zweiten pseudo-zufälligen Datenworte durch Verknüpfung von Datenworten einer Folge von Datenworten gemäß der aktuell ausgewählten Verknüpfungsvorschrift gebildet werden. Aus den zweiten pseudo-zufälligen Datenworten werden die pseudo-zufälligen Datenworte gebildet.

Der wesentliche Vorteil des erfindungsgemäßen Verfahrens besteht darin, daß einer Folge von Datenworten mehrere Rückkopplungsfunktionen zugeordnet sind, wobei abhängig vom Verarbeitstakt, bzw. für die Dauer eines Verarbeitungstaktes jeweils eine Rückkopplungsfunktion zufällig ausgewählt wird. Durch die erfindungsgemäße schnelle Variation der aktuell ausgewählten Rückkopplungsfunktionen, werden lineare Zusammenhänge zerstört. Ein weiterer Vorteil des erfindungsgemäßen Verfahrens besteht darin, daß durch die Verwendung bzw. Verknüpfung von Datenworten die gebildeten pseudo-zufälligen Datenworte mit einer hohen Datenrate bereitgestellt werden. Durch die dadurch ermöglichte Verarbeitung der zu übermittelnden Informationen mit vielen unterschiedlichen Rückkopplungsfunktionen wird die Sicherung von hochbitratigen, über ein Kommunikationsnetz zu übermittelnden und/oder in diesen zu speichernden Nutzinformationen gegen den Zugriff unbefugter Dritter erheblich verbessert.

Vorteilhaft werden beim ersten Verfahren zur Erzeugung pseudo-zufälliger Datenworte die ersten pseudo-zufälligen Datenworte durch Verknüpfung von Datenworten einer ersten Folge von Datenworten gemäß einer ersten Verknüpfungsvorschrift gebildet - Anspruch 3. Durch diese vorteilhafte Ausgestaltung ist das erfindungsgemäße Verfahren ohne großen technischen Aufwand mit Hilfe von Rechner-gesteuerten Prozessen realisierbar, wobei die pseudo-zufälligen Datenworte mit einer hohen Datenrate bereitgestellt werden.

Gemäß einer vorteilhaften Ausgestaltung werden weitere pseudo-zufällige Datenworte durch Verknüpfung von Datenworten einer weiteren Folge von Datenworten gemäß einer weiteren Verknüpfungsvorschrift gebildet, wobei die aktuelle weitere Verknüpfungsvorschrift in Abhängigkeit von den gebildeten ersten und/oder zweiten pseudo-zufälligen Datenworten aus den mehreren Verknüpfungsvorschriften und/oder aus mehreren weiteren Verknüpfungsvorschriften ausgewählt wird. Mit Hilfe der gebildeten ersten und/oder zweiten und/oder weiteren pseudozufälligen Datenworte werden die pseudo-zufälligen Datenworte gebildet - Anspruch 4. Durch diese vorteilhafte Ausgestaltung wird eine beliebige Skalierbarkeit des erfindungsgemäßen Verfahrens ermöglicht, wobei die Rekonstruierbarkeit der erzeugten, pseudo-zufälligen Datenworte bzw. die Rekonstruierbarkeit des dem Verschlüsselungsverfahren zu Grunde liegenden Schlüssels weiter erschwert wird.

Gemäß einer weiteren vorteilhaften Ausgestaltung wird die Erzeugung der ersten pseudo-zufälligen Datenworte mit einer 1 bis m vorgegebene Datenworte aufweisenden ersten Datenwort-Startfolge und die Erzeugung der zweiten pseudo-zufälligen Datenworte mit einer 1 bis l vorgegebene Datenworte aufweisenden zweiten Datenwort-Startfolge gestartet. Während des Ablaufs des erfindungsgemäßen Verfahrens wird bei jedem Verarbeitungstakt aus den aktuell vorliegenden Folgen von Datenworten gemäß der ersten und der ausgewählten Verknüpfungsvorschrift das erste und das zweite pseudo-zufällige Datenwort gebildet und das vorhergehend erste bis (m-1)-te Datenwort der ersten Folge von Datenworten zum aktuellen zweiten bis mten Datenwort der ersten Folge von Datenworten. Das vorhergehend erste bis (l-1)-te Datenwort der zweiten Folge von Datenworten wird zum aktuellen zweiten bis l-ten Datenwort der zweiten Folge von Datenworten und das gebildete erste und zweite pseudo-zufällige Datenwort wird zum aktuellen ersten Datenwort der ersten und zweiten Folge von Datenworten. Die Datenworte und die gebildeten ersten und zweiten pseudozufälligen Datenworte und die gebildeten pseudo-zufälligen Datenworte repräsentieren vorteilhaft binäre Informationen - Anspruch 5 und 6. Durch diese vorteilhafte Ausgestaltung ist das erfindungsgemäße Verfahren mit Hilfe von Hardware-Implementierungen - beispielsweise durch Schieberegister mit linearer Rückkopplung - realisierbar, wobei durch den Einsatz schaltungstechnischer Komponenten eine hohe Verarbeitungsgeschwindigkeit erreicht wird und vorteilhaft eine eine hohe Datenrate aufweisende Folge von pseudo-zufälligen Datenworte zur Verschlüsselung hochbitratiger Datenströme erzeugt wird.

Vorteilhaft erfolgt die Bildung der ersten pseudo-zufälligen Datenworte mit einem ersten Verarbeitungstakt und die Bildung der zweiten pseudo-zufälligen Datenworte mit einem zweiten Verarbeitungstakt - Anspruch 11. Durch die Verwendung unterschiedlicher Verarbeitungstakte wird die Qualität der Verschlüsselung weiter verbessert.

Weitere vorteilhafte Ausgestaltungen des erfindunsgemäßen Verfahrens sind den weiteren Ansprüchen zu entnehmen.

Im folgenden wird das erfindungsgemäße Verfahren anhand eines den erfindungsgemäßen Ablauf zur Bildung pseudo-zufälliger Datenworte $k_n$ darstellen-den Blockschaltbildes näher erläutert.

Das Blockschaltbild zeigt einen ersten Datenwortspeicher SPW1, in welchem gemäß diesem Ausführungsbeispiel - m = 4 - vier Datenwort-Speicherzellen W1...4 angeordnet sind. In jeder Datenwort-Speicherzelle W1...4 ist ein Datenwort $y_{n-1}...y_{n-4}$ speicherbar, wobei die gespeicherten Datenworte $y_{n-1}...y_{n-4}$ jeweils eine binäre Information mit der Wortbreite b repräsentieren. Die Wortbreite b ist beliebig wählbar - $b \geq 1$ -; in diesem Ausführungsbeispiel weisen die Datenworte $y_{n-1}...y_{n-4}$ jeweils eine Wortbreite von b = 4 Bit auf. Die im ersten Datenwortspeicher SPW1 gespeicherten Datenworte $y_{n1}...y_{n-4}$ werden über Ver-bindungsleitungen einer ersten dem ersten Datenwortspeicher SPW1 zugeordneten Verknüpfungseinheit VK1 zugeführt - durch Pfeile angedeutet. Durch in der ersten Verknüpfungseinheit VK1 angeordnete Verknüpfungsmittel EXOR wird aus den herangeführten Daten-worten $y_{n-1}...y_{n-4}$ gemäß einer vorgegebenen, ersten Verknüpfungsvorschrift g ein erstes Verknüpfungsergebnis $y_n$ gebildet. In diesem Ausführungsbeispiel ist die erste Verknüpfungsvorschrift g durch ein erstes Generatorpolynom $g(r) = r^4 + r^2 + 1$ beschrieben, nach welchem das zweite, an die erste Verknüpfungseinheit VK1 herangeführte Datenwort $y_{n-2}$ und das vierte, an die erste Verknüpfungseinheit VK1 herangeführte Datenwort $y_{n-4}$ zu dem aktuellen ersten Verknüpfungsergebnis $y_n$ Exklusiv-ODER verknüpft, und das gebildete erste Verknüpfungsergebnis $y_n$ an einen Ausgang KA der ersten Verknüpfungseinheit VK1 weitergeleitet wird. Das am Ausgang KA anliegende, erste Verknüpfungsergebnis $y_n$ wird in einer Speicherzelle Z eines Bitmuster-Speichers SPB gespeichert - durch einen Pfeil angedeutet. Durch im Bitmuster-Speicher SPB angeordnete Maskierungs-Mittel - nicht dargestellt - werden die drei niederwertigsten Datenbits des in der Speicherzelle Z gespeicherten Datenwortes $y_n$ erfaßt und aus diesen ein aktuelles Bitmuster $bm_n$ gebildet, wobei das gebildete, aktuelle Bitmuster $bm_n$ an einen Eingang GE eines Speichers SPG herangeführt ist. Des Weiteren ist das in der Speicherzelle Z gespeicherte erste Verknüpfungsergebnis $Y_n$ über einen Ausgang BA des Bitmuster-Speichers SPB und über Verbindungsleitungen an einen Eingang WE des ersten Datenwortspeichers SPW1 und an einen ersten Eingang XE1 eines dritten Verknüpfungsmittels VK3 geführt. Der Eingang WE des ersten Datenwortspeichers SPW1 ist mit der ersten im ersten Datenwortspeicher SPW1 angeordneten Speicherzelle W1 verbunden - durch einen strichlierten Pfeil angedeutet.

Im Speicher SPG ist eine acht Tabelleneinträge t1...8 aufweisende Tabelle T angeordnet. In jedem Tabelleneintrag t1...8 ist ein, jeweils eine zweite Verknüpfungsvorschrift $f_{0...7}$ repräsentierendes, zweites Generatorpolynom $f_{0...7}(r)$ gespeichert, wobei jeder gespeicherten zweiten Verknüpfungsvorschrift $f_{0...7}$, bzw. jedem gespeichertem zweiten Generatorpolynom $f_{0...7}(r)$ eine durch eine binäre Information der Wortbreite von beispielsweise n = 3 repräsentierte Bitsterkombination bm1...8 zugeordnet ist. Beispielsweise ist die erste zweite Verknüpfungsvorschrift $f_0$ durch das erste zweite Generatorpolynom $f_0(r) = r^5 + r + 1$ dargestellt, wobei dem ersten zweiten Generatorpolynom $f_0(r)$ die erste Bitmusterkombination bm0 = „000" zugeordnet ist. Des Weiteren ist die zweite zweite Verknüpfungsvorschrift $f_1$ durch das zweite zweite Generatorpolynom $f_1(r) = r^5 + r^4 + r^3 + 1$ dargestellt, welcher die zweite Bitmusterkombination bm2 = „001" zugeordnet ist. Dem im dritten Tabelleneintrag t3 gespeicherten dritten zweiten Generatorpolynom $f_2(r) = r^4 + r + 1$ ist die dritte Bitmusterkombination bm3 = „010" und beispielsweise dem im achten Tabelleneintrag t8 gespeicherten, achten zweiten Generatorpolynom $f_7(r) = r^4 + r^2 + r + 1$ ist die achte Bitmusterkombination bm8 = „111" zugeordnet.

Durch im Speicher SPG angeordnete Vergleicher-Mittel - nicht dargestellt - wird das am Eingang GE des Speichers SPG anliegende, aktuelle Bitmuster $bm_n$ mit den in den einzelnen Tabelleneinträgen t0...7 gespeicherten Bitmusterkombinationen bm1...8 verglichen und diejenige Bitmusterkombination bm1...8 ermittelt, welche mit dem am Eingang GE anliegenden aktuellen Bitmuster $bm_n$ identisch ist. Nach Bestimmung der mit dem aktuellen Bitmuster $bm_n$ übereinstimmenden Bitmusterkombination bm1...8 wird die entsprechende, der identischen Bitmusterkombination bm1...8 zugeordnete Verknüpfungsvorschrift $f_{0...7}$ bzw. das diese darstellende Generatorpolynom $f_{0...7}(r)$ ausgewählt und das ausgewählte Generatorpolynom $f_{0...7}(r)$ über einen Ausgang GA des Speichers SPG an eine dem Speicher SPG zugeordnete zweite Verknüpfungseinheit VK2 übermittelt - durch einen Pfeil angedeutet.

Die zweite Verknüpfungseinheit VK2 weist Verknüpfungsmittel EXOR auf, in welcher die vom Speicher SPG an die zweite Verknüpfungseinheit VK2 herangeführte Verknüpfungsvorschrift $f_{0...7}$ als aktuell ausgewählte Verknüpfungsvorschrift $f_k$ bzw. als aktuell ausgewähltes Generatorpolynom $f_k(r)$ gespeichert ist. Die zweite Verknüpfungseinheit VK2 ist über Verbindungsleitungen - nicht dargestellt - mit einem zweiten Datenwortspeicher SPW2 verbunden. Gemäß dem Ausführungsbeispiel sind im zweiten Datenwortspeicher SPW2 fünf Datenwort-Speicherzellen W1...5 angeordnet - 1 = 5 -, in welche jeweils ein eine binäre Information mit der Wortbreite c darstellendes Datenwort $x_{n-1}...x_{n-5}$ speicherbar ist. Die Wortbreite c ist beliebig wählbar - $c \geq 1$ -; vorteilhaft ist im Ausführungsbeispiel die Wortbreite c der im zweiten Datenwortspeicher SPW2 gespeicherten Datenworte $x_{n-1}...x_{n-5}$ an die Wortbreite b der im ersten Datenwortspeicher SPW1 gespeicherten Datenworte $y_{n-1}...y_{n-4}$ angepaßt - c = b = 4 Bit. Jedes der im zweiten Datenwortspeicher SPW2 gespeicherten Datenworte $y_{n-1}...y_{n-5}$ wird der zweiten Verknüpfungseinheit VK2 zugeführt - durch Pfeile angedeutet. Durch die in der zweiten Verknüpfungseinheit VK2 angeordneten Verknüpfungsmittel EXOR werden die herangeführten Datenworte $x_{n-1}...x_{n-5}$ gemäß der ausgewählten, vom Speicher SPG an die zweite Verknüpfungseinheit VK2 herangeführten und in dieser gespeicherten Verknüpfungsvorschrift $f_k$ bzw. gemäß dem die ausgewählte Verknüpfungsvorschrift $f_k$ repräsentierenden Generatorpolynom $f_k(r)$ zu einem aktuellen zweiten Verknüpfungsergebnis $x_n$ verknüpft, und anschließend das gebildete zweite Verknüpfungsergebnis $x_n$ an einen Ausgang KA der zweiten Verknüpfungseinheit VK2 geführt.

Das am Ausgang KA der zweiten Verknüpfungseinheit VK2 anliegende zweite Verknüpfungsergebnis $x_n$ wird über Verbindungsleitungen an einen zweiten Eingang XE2 der dritten Verknüpfungseinheit VK3 und an einen Eingang WE des zweiten Datenwortspeichers SPW2 weitergeleitet. Der Eingang WE des zweiten Datenwortspeichers SPW2 ist an die erste im zweiten Datenwortspeicher SPW2 angeordneten Speicherzelle W1 herangeführt - durch einen strichlierten Pfeil angedeutet. Durch in der dritten Verknüpfungseinheit VK3 angeordnete Verknüpfungsmittel EXOR wird das am ersten Eingang XE1 anliegende erste Verknüpfungsergebnis $y_n$ mit dem am zweiten Eingang XE2 anliegenden zweiten Verknüpfungsergebnis $x_n$ zu einem das pseudo-zufällige Datenwort $k_n$ repräsentierenden, dritten Verknüpfungsergebnis Exklusiv-ODER verknüpft und an einen Ausgang XA der dritten Verknüpfungseinheit VK3 weitergeleitet.

Alle im Blockschaltbild dargestellten Einheiten SPW1, SPW2, VK1, VK2, SPB, SPG, VK3 sind mit nicht dargestellten Taktmitteln zur Bereitstellung von Taktintervalle definierenden Taktimpulsen verbunden.

Im folgenden wird das erfindungsgemäße Verfahren zur taktilen Erzeugung der pseudo-zufälligen Datenworte $k_n$ näher erläutert:

Während des den Beginn des Verfahrens repräsentierenden ersten Taktintervalls t sind in den vier im ersten Datenwortspeicher SPW1 angeordneten Datenwort-Speicherzellen W1...4 eine erste Datenwort-Startfolge repräsentierende InitialisierungsDatenworte $Y_{n-1}...y_{n-4}$ und in den fünf im zweiten Datenwortspeicher SP2 angeordneten Datenwort-Speicherzellen W1...5 eine zweite Datenwort-Startfolge repräsentierende Initialisierungs-Datenworte $x_{n-1}...x_{n-5}$ gespeichert. Gemäß dem Blockschaltbild ist in der ersten im ersten Datenwortspeicher SPW1 angeordneten Speicherzelle W1 die binäre Information "1110" als erstes Datenwort $Y_{n-1}$ gespeichert. Des Weiteren ist in der zweiten Datenwort-Speicherzelle W2 die binäre Information "1001" als zweites Datenwort $Y_{n-2}$, in der dritten Datenwort-Speicherzelle W3 die binäre Information "1010" als drittes Datenwort $y_{n-3}$ und in der vierten Datenwort-Speicherzelle W4 die binäre Information "0011" als viertes Datenwort $y_{n-4}$ gespeichert. Im zweiten Datenwortspeicher SPW2 ist in der ersten Datenwort-Speicherzelle W1 die binäre Information "1010" als erstes Datenwort $x_{n-1}$, in der zweiten Datenwort-Speicherzelle W2 die binäre Information "1111" als zweites Datenwort $x_{n-2}$, in der dritten Datenwort-Speicherzelle W3 die binäre Information "0011" als drittes Datenwort $X_{n-3}$, in der vierten Datenwort-Speicherzelle W4 die binäre Information "1110" als viertes Datenwort $x_{n-4}$ und in der fünften Datenwort-Speicherzelle W5 die binäre Information "0110" als fünftes Datenwort $x_{n-5}$ gespeichert.

Gemäß dem in der ersten Verknüpfungseinheit VK1 gespeicherten Generatorpolynom $g(r) = r^4 + r^2 + 1$, bzw. gemäß der durch dieses Generatorpolynom g(r) dargestellten ersten Verknüpfungsvorschrift $y_n = y_{n-2} + y_{n-4}$ wird das zweite und das vierte an die erste Verknüpfungseinheit VK1 herangeführte Datenwort $Y_{n-2}$, $y_{n-4}$ zu dem ersten Verknüpfungsergebnis $Y_n$ Exklusiv-ODER verknüpft und das Verknüpfungsergebnis $y_n = $ "1010" in der Speicherzelle Z des Bitmuster-Speichers SPB gespeichert. Durch die im Bitmuster-Speicher SPB angeordneten Maskierungsmittel werden die drei niederwertigsten Datenbits des ersten Verknupfungsergebnisses $y_n$ ermittelt und als aktuelles Bitmuster $bm_n = $ "010" an den Eingang SE des Speichers SPG weitergeleitet. Durch die im Speicher SPG angeordneten Vergleichsmittel wird das am Eingang GE anliegende, aktuelle Bitmuster $bm_n$ mit den in den einzelnen Tabelleneinträgen t1...8 gespeicherten Bitmusterkombinationen bm1...8 auf Übereinstimmung überprüft. Gemäß dem Ausführungsbeispiel wird eine Übereinstimmung mit der im dritten Tabelleneintrag t3 gespeicherten dritten Bitmusterkombination bm3 = "010" festgestellt, und die der dritten Bitmusterkombination bm3 zugeordnete dritte Verknüpfungsvorschrift $f_2$ bzw. das diese darstellende dritte Generatorpolynom $f_2(r) = r^4 + r + 1$ als aktuelle zweite Verknüpfungsvorschrift $f_k$ ausgewählt, an die zweite Verknüpfungseinheit VK2 übermittelt und in dieser gespeichert.

Gemäß dem übermittelten und als aktuelle zweite Verknüpfungsvorschrift $f_k$ gespeicherten Generatorpolynom $f_2(r) = r^4 + r + 1$ wird das an die zweiten Verknüpfungseinheit VK2 herangeführte erste Datenwort $x_{n-1} = $ "1010" mit dem herangeführten vierten Datenwort $x_{n-4} = $ "1110" durch die Verknüpfungsmittel EXOR zu dem zweiten Verknüpfungsergebnis $x_n$ Exklusiv-ODER verknüpft und das gebildete zweite Verknüpfungsergebnis $x_n = $ "0100" an den Ausgang KA der zweiten Verknüpfungseinheit VK2 geleitet. Durch die in der dritten Verknüpfungseinheit VK3 angeordneten Verknüpfungsmittel EXOR wird das an den ersten Eingang XE1 herangeführte erste Verknüpfungsergebnis $y_n = $ "1010" mit dem an den zweiten Eingang XE2 herangeführte zweiten Verknüpfungsergebnis $x_n = $ "0100" zu dem dritten Verknüpfungsergebnis $k_n = $ "1110" Exklusiv-ODER verknüpft und das dritte Verknüpfungsergebnis $k_n = $ "1110" als erstes erzeugtes pseudo-zufälliges Datenwort $k_n$ an den Ausgang XA der dritten Verknüpfungseinheit VK3 geleitet. Das am Ausgang XA anliegende pseudo-zufällige Datenwort $k_n$ kann für die Verschlüsselung bzw. Chiffrierung von Nutzdaten insbesondere zur Verschlüsselung von Nutzdaten übermittelnden Datenstromen eingesetzt werden.

Zu Beginn des folgenden Taktintervalls t+1 wird das in der Speicherzelle Z des Bitmusterspeichers SPB gespeicherte und am Eingang WE des ersten Datenwortspeichers SPW1 anliegende erste Verknüpfungsergebnis $y_n = $ "1010" als aktuelles erstes Datenwort $Y'_{n-1}$ in der ersten Datenwort-Speicherzelle W1 des ersten Datenwortspeichers SPW1 gespeichert. Entsprechend wird das im vorherigen Taktintervall t in der ersten Speicherzelle W1 gespeicherte, vorhergehende erste Datenwort $y_{n-1}$ als aktuelles zweites Datenwort $y'_{n-2} = $ "1110" in der zweiten Datenwort-Speicherzelle W2, das im vorhergehenden Taktintervall t in der zweiten Datenwort-Speicherzelle W2 gespeicherte, vorhergehende zweite Datenwort $y_{n-2}$ als aktuelles drittes Datenwort $y'_{n-3} = $ "1001" in der dritten Datenwort-Speicherzelle W3, und das im vorhergehenden Taktintervall t in der dritten Datenwort-Speicherzelle W3 gespeicherte, vor-

hergehende dritte Datenwort $y_{n-3}$ als aktuelles viertes Datenwort $y'_{n-4}$ = "1010" in der vierten Datenwort-Speicherzelle W4 gespeichert. Das im vorhergehenden Taktintervall t in der vierten Datenwort-Speicherzelle gespeicherte, vorhergehende vierte Datenwort $y_{n-4}$ wird verworfen.

Des Weiteren wird während des aktuellen Taktintervalls t+1 das am Eingang WE des zweiten Datenwortspeichers SPW2 anliegende, aktuelle zweite Verknüpfungsergebnis $X_n$ = "0100" als aktuelles erstes Datenwort $x'_{n-1}$ = "0100" in der ersten Datenwort-Speicherzelle W1 des zweiten Datenwortspeichers SPW2 gespeichert. Entsprechend wird das im vorhergehenden Taktintervall t in der ersten Datenwort-Speicherzelle W1 gespeicherte vorhergehende erste Datenwort $x_{n-1}$ als aktuelles zweites Datenwort $X'_{n-2}$ = "1010" in der zweiten Datenwort-Speicherzelle W2 gespeichert; das im vorhergehenden Taktintervall t in der zweiten Datenwort-Speicherzelle W2 gespeicherte, vorhergehende zweite Datenwort $x_{n-2}$ wird als aktuelles drittes Datenwort $x'_{n-3}$ = "1111" in der dritten Datenwort-Speicherzelle W3 gespeichert; das im vorhergehenden Taktintervall t in der dritten Datenwort-Speicherzelle W3 gespeicherte, vorhergehende dritte Datenwort $x_{n-3}$ wird als aktuelles viertes Datenwort $x'_{n-4}$ = "0011" in der vierten Datenwort-Speicherzelle W4 gespeichert; das im vorhergehenden Taktintervall t in der vierten Datenwort-Speicherzelle W4 gespeicherte, vorhergehende vierte Datenwort $x_{n-4}$ wird als aktuelles fünftes Datenwort $y'_{n-5}$ = "1110" in der fünften Datenwort-Speicherzelle W5 gespeichert; das im vorhergehenden Taktintervall t in der fünften Datenwort-Speicherzelle W5 gespeicherte vorhergehende fünfte Datenwort $x_{n-5}$ wird verworfen.

Wie bereits für das vorhergehende Taktintervall t beschrieben, wird durch die in der ersten Verknüpfungseinheit VK1 angeordneten Verknüpfungsmittel EXOR im folgenden Taktintervall t+1 das anliegende aktuelle zweite Datenwort $Y'_{n-2}$ = "1110" mit dem anliegenden, aktuellen vierten Datenwort $y'_{n-4}$ = "1010" gemäß dem die Verknüpfungsvorschrift g repräsentierenden Generatorpolynom $g(r) = r^4 + r^2 + 1$ Exklusiv-ODER verknüpft und das gebildete, aktuelle erste Verknüpfungsergebnis $y'_n$ = "0100" in der Speicherzelle Z des Bitmuster-Speichers SPB gespeichert. Wie bereits erläutert werden durch die im Bitmuster-Speicher SPB angeordneten Maskierungs-Mittel die drei niederwertigsten Datenbits des gespeicherten, aktuellen ersten Verknüpfungsergebnisses $y'_n$ ermittelt und als aktuelles Bitmuster $bm'_n$ = "100" an den Eingang SE des Speichers SPG weitergeleitet. Durch die im Speicher SPG angeordneten Vergleicher-Mittel wird die mit dem am Eingang SE anliegenden, aktuellen Bitmuster $bm_n$ übereinstimmende Bitmusterkombination bm1...8 ermittelt; in diesem Ausführungsbeispiel wird für das aktuelle Taktintervall t+1 die im nicht dargestellten vierten Tabelleneintrag t4 gespeicherte vierte Bitmusterkombination bm4 = "100" ermittelt und entsprechend das zugeordnete vierte Generatorpolynom - beispielsweise $f_3(r) = r^5 + r^3 + 1$ -als aktuelle zweite Verknüpfungsvorschrift $f'_k$ an die zweite Verknüpfungseinheit VK2 übermittelt und in dieser gespeichert. Durch die in der zweiten Verknüpfungseinheit VK2 angeordneten Verknüpfungsmittel EXOR wird das an der zweiten Verknüpfungseinheit VK2 anliegende, aktuelle fünfte Datenwort $x'_{n-5}$ = "1110" mit dem anliegenden, aktuellen dritten Datenwort $x'_{n-3}$ = "1111" zu dem aktuellen zweiten Verknüpfungsergebnis $x'_n$ = "0001" gemäß der für das aktuelle Taktintervall t+1 aktuell wirksamen zweiten Verknüpfungsvorschrift $x_n = x_{n-5} + x_{n-1}$ Exklusiv-ODER verknüpft und anschließend das gebildete, aktuelle zweite Verknüpfungsergebnis $x'_n$ = "0001" und das aktuelle erste Verknüpfungsergebnis $y'_n$ = "0100" in beschriebener Art und Weise durch die in der dritten Verknüpfungseinheit VK3 angeordneten Verknüpfungsmittel EXOR zu dem aktuellen, pseudo-zufällige Datenwort $k'_n$ = "0101" Exklusiv-ODER verknüpft.

Für die nachfolgenden Taktintervalle t+i - i>1 - läuft das erfindungsgemäße Verfahren zur Erzeugung pseudo-zufälliger Datenworte $k_n$ in beschriebener Art und Weise ab.

Vorteilhaft können der erste Datenwortspeicher SPW1 und die diesem zugeordnete erste Verknüpfungseinheit VK1 sowie der zweite Datenwortspeicher SPW2 und die diesem zugeordnete zweite Verknüpfungseinheit VK2 mit unterschiedlichen Taktimpulsen zur Realisierung unterschiedlicher Taktintervalle t angesteuert werden, wodurch die Qualität der erzeugten pseudo-zufälligen Datenworte $k_n$ und somit die Qualität der Verschlüsselung von Nutzinformationen mit Hilfe der erzeugten pseudo-zufälligen Datenworte $k_n$ weiter verbessert wird.

Bei dem erfindungsgemäßen Verfahren stellen die die erste und zweite Datenwort-Startfolge repräsentierenden Initialisierungs-Datenworte $Y_{n-1}...y_{n-4}$, $x_{n-1}...x_{n-5}$, die in der ersten Verknüpfungseinheit VK1 gespeicherte Verknüpfungsvorschrift g, die im Speicher SPG gespeicherten Verknüpfungsvorschriften $f_{0...7}$ und deren zugeordnete Bitmusterkombinationen bm1...8 sowie die Informationen über die eingesetzten Taktintervalle t Schlüsselinformationen dar, welche zum Entschlüsseln der mit Hilfe des erfindungsgemäßen Verfahrens verschlüsselten Nutzinformationen bekannt sein müssen.

Gemäß einer nicht dargestellten weiteren vorteilhaften Ausgestaltung des erfindungsgemäßen Verfahrens werden in beschriebener Art und Weise weitere Verknüpfungsergebnisse bzw. pseudo-zufällige Datenworte mit Hilfe weiterer Datenwortspeicher und weiterer Verknüpfungseinheiten gebildet und die gebildeten weiteren Verknüpfungsergebnisse zusammen mit den ersten und zweiten Verknüpfungsergebnissen $y_n$, $x_n$ zu dem pseudo-zufälligen Datenwort $k_n$ beispielsweise Exklusiv-ODER verknüpft. Durch diese Ausgestaltungsvariante wird das Entschlüsseln der Nutzinformationen und die Rekonstruierbarkeit der Schlüsselinformationen weiter erschwert.

**Patentansprüche**

1. Verfahren zur taktilen Erzeugung pseudo-zufälliger Datenworte ($k_n$),

   - bei dem erste pseudo-zufällige Datenworte ($y_n$) mit Hilfe eines ersten Verfahrens zur Erzeugung pseudo-zufälliger Datenworte gebildet werden, und
   - bei dem zweite pseudo-zufällige Datenworte ($x_n$) mit Hilfe eines zweiten Verfahrens zur Erzeugung pseudo-zufälliger Datenworte gebildet werden,

   **dadurch gekennzeichnet,**

   - daß in Abhängigkeit von den gebildeten ersten pseudo-zufälligen Datenworten ($y_n$) aus mehreren Verknüpfungsvorschriften ($f_{0...7}(r)$) eine aktuelle Verknüpfungsvorschrift ($f_k(r)$) ausgewählt wird,
   - daß die zweiten pseudo-zufälligen Datenworte ($x_n$) durch Verknüpfung von Datenworten ($x_{n-1}...x_{n-5}$) einer Folge von Datenworten gemäß der aktuell ausgewählten Verknüpfungsvorschrift ($f_k(r)$) gebildet werden, und
   - daß aus den zweiten pseudo-zufälligen Datenworten ($x_n$) die pseudo-zufälligen Datenworte ($k_n$) gebildet werden.

2. Verfahren nach Anspruch 1,
   **dadurch gekennzeichnet,**
   daß zusätzlich mit Hilfe der gebildeten ersten pseudo-zufälligen Datenworte ($y_n$) die pseudo-zufälligen Datenworte ($k_n$) gebildet werden.

3. Verfahren nach Anspruch 1 oder 2,
   **dadurch gekennzeichnet,**
   daß beim ersten Verfahren zur Erzeugung pseudo-zufälliger Datenworte die ersten pseudo-zufälligen Datenworte ($y_n$) durch Verknüpfung von Datenworten ($y_{n-1}...y_{n-4}$) einer ersten Folge von Datenworten gemäß einer ersten Verknüpfungsvorschrift ($g(r)$) gebildet werden.

4. Verfahren nach einem der vorherigen Ansprüche,
   **dadurch gekennzeichnet,**

   - daß weitere pseudo-zufällige Datenworte durch Verknüpfung von Datenworten einer weiteren Folge von Datenworten gemäß einer weiteren Verknüpfungsvorschrift gebildet werden, wobei die aktuelle weitere Verknüpfungsvorschrift in Abhängigkeit von den gebildeten ersten und/oder zweiten pseudo-zufälligen Datenworten aus den mehreren Verknüpfungsvorschriften ($f_{0...7}(r)$) und/oder aus mehreren weiteren Verknüpfungsvorschriften ausgewählt wird, und
   - daß mit Hilfe der gebildeten ersten und/oder zweiten und/oder weiteren pseudo-zufälligen Datenworte ($y_n$, $x_n$) die pseudo-zufälligen Datenworte ($k_n$) gebildet werden.

5. Verfahren nach Anspruch 3 oder 4,
   **dadurch gekennzeichnet,**

   - daß die Erzeugung der ersten pseudo-zufälligen Datenworte ($y_n$) mit einer 1 bis m vorgegebene Datenworte ($y_{n-1}...y_{n-4}$) aufweisenden ersten Datenwort-Startfolge und die Erzeugung der zweiten pseudo-zufälligen Datenworte ($x_n$) mit einer 1 bis 1 vorgegebene Datenworte ($x_{n-1}...x_{n-5}$) aufweisenden zweiten Datenwort-Startfolge gestartet wird, und
   - daß bei jedem Verarbeitungstakt ($t$, $t+1$)

     -- aus den aktuell vorliegenden Folgen von Datenworten ($y_{n-1}...y_{n-4}$, $x_{n-1}...x_{n-5}$) gemäß der ersten und der ausgewählten Verknüpfungsvorschrift ($g(r)$, $f_k(r)$) das erste und das zweite pseudo-zufällige Datenwort ($y_n$, $x_n$) gebildet wird, und
     -- das vorhergehend erste bis ($m-1$)-te Datenwort ($y_{n-1}...y_{n-3}$) der ersten Folge von Datenworten zum aktuellen zweiten bis m-ten Datenwort ($y'_{n-2}...y'_{n-4}$) der ersten Folge von Datenworten wird,
     -- das vorhergehend erste bis ($l-1$)-te Datenwort ($x_{n-1}...x_{n-4}$) der zweiten Folge von Datenworten zum aktuellen zweiten bis l-ten Datenwort ($x'_{n-2}...x'_{n-5}$) der zweiten Folge von Datenworten wird,
     -- das aktuell gebildete erste und zweite pseudo-zufällige Datenwort ($y_n$, $x_n$) zum aktuellen ersten Datenwort ($y'_{n-1}$, $x'_{n-1}$) der ersten und zweiten Folge von Datenworten wird.

6. Verfahren nach einem der vorherigen Ansprüche,
   **dadurch gekennzeichnet,**
   daß die Datenworte ($y_{n-1}...y_{n-4}$, $x_{n-1}...x_{n-5}$) und die gebildeten ersten und zweiten pseudo-zufälligen Datenworte ($y_n$, $x_n$) und die gebildeten pseudo-zufälligen Datenworte ($k_n$) binäre Informationen repräsentieren.

7. Verfahren nach einem vorherigen Ansprüche,
   **dadurch gekennzeichnet,**
   daß die Verknüpfungsvorschriften ($g(r)$, $f_{0...7}(r)$) jeweils durch Generatorpolynome realisiert sind.

8. Verfahren nach einem der vorherigen Ansprüche,
   **dadurch gekennzeichnet,**
   daß die Datenworte ($y_{n-1}...Y_{n-4}$, $x_{n-1}...x_{n-5}$) und die gebildeten ersten und zweiten pseudo-zufälligen

Datenworte ($y_n$, $x_n$) und die gebildeten pseudo-zufälligen Datenworte ($k_n$) jeweils eine Wortbreite b,c ≥ 1 umfassen.

9. Verfahren nach einem der vorherigen Ansprüche,
**dadurch gekennzeichnet,**
daß die pseudo-zufälligen Datenworte ($k_n$) jeweils durch eine Exklusiv-ODER Verknüpfung der gebildeten ersten und zweiten pseudo-zufälligen Datenworte ($y_n$, $x_n$) gebildet werden.

10. Verfahren nach einem der vorherigen Ansprüche,
**dadurch gekennzeichnet,**
daß die aktuelle Verknüpfungsvorschrift ($f_K(r)$) mit Hilfe einer Bit-Maske in Abhängigkeit von dem zumindest einen gebildeten, ersten pseudo-zufälligen Datenwort ($y_n...y_{n-4}$) aus den mehreren Verknüpfungsvorschriften ($f_{0...7}(r)$) ausgewählt wird.

11. Verfahren nach einem der vorherigen Ansprüche,
**dadurch gekennzeichnet,**
daß die Bildung der ersten pseudo-zufällige Datenworte ($y_n$) mit einem ersten Verarbeitungstakt und die Bildung der zweiten pseudo-zufällige Datenworte ($x_n$) mit einem zweiten Verarbeitungstakt erfolgt.

12. Verfahren nach einem der vorherigen Ansprüche,
**dadurch gekennzeichnet,**
daß mit Hilfe der gebildeten pseudo-zufälligen Datenworte ($k_n$) Nutzinformationen codiert/verschlüsselt oder decodiert/entschlüsselt werden.

SPW1

| W1 | W2 | W3 | W4 |
|---|---|---|---|

WE

| $y_{n-1}$ | $y_{n-2}$ | $y_{n-3}$ | $y_{n-4}$ |
|---|---|---|---|
| "1110" | "1001" | "1010" | "0011" |

$y'_{n-1}$ = "1010"
$y'_{n-2}$ = "1110"
$y'_{n-3}$ = "1001"
$y'_{n-4}$ = "1010"

VK1

$g(r) = r^4 + r^2 + 1$
$y_n = y_{n-2} + y_{n-4}$

(+) EXOR

KA

BA

$y_n$

SPB

$y_n = $ "1010"
$y'_n = $ "0100"

| 1 | 0 | 1 | 0 | $y_n$ |
|---|---|---|---|---|

Z

GE    SPG

VK3

T

XE1

$k_n$

XA (+) EXOR

XE2

$k_n = $ "1110"
$k'_n = $ "0101"

t1: | $f_0(r) = r^5 + r + 1$ | 000 | bm1
t2: | $f_1(r) = r^5 + r^4 + r^3 + 1$ | 001 | bm2
t3: | $f_2(r) = r^4 + r + 1$ | 010 | bm3

•
•
•

t8: | $f_7(r) = r^4 + r^2 + r + 1$ | 111 | bm8

VK2

$f_k(r) = ...$
$x_n = ...$

(+) EXOR

$x_n = $ "0100"
$x'_n = $ "0001"

$x_n$

KA

$f_k(r) = r^4 + r + 1$
$f'_k(r) = r^5 + r^3 + 1$

| $x_{n-1}$ | $x_{n-2}$ | $x_{n-3}$ | $x_{n-4}$ | $x_{n-5}$ |
|---|---|---|---|---|
| "1010" | "1111" | "0011" | "1110" | "0110" |

WE

SPW2

W1  W2  W3  W4  W5

$x'_{n-1}$ = "0100"
$x'_{n-2}$ = "1010"
$x'_{n-3}$ = "1111"
$x'_{n-4}$ = "0011"
$x'_{n-5}$ = "1110"